# FASCICULE DE BREVET EUROPEEN

(11) **EP 0 318 550 B1**
(45) Date de publication et mention de la délivrance du brevet: **17.03.1993**
(21) Numéro de dépôt: 88905172.8
(22) Date de dépôt: 21.06.1988
(51) Int. Cl.: A47J 43/12, B01F 5/06

(54) **APPAREIL MENAGER PERMETTANT DE FOUETTER LA CREME**
HAUSHALTSGERÄT ZUR HERSTELLUNG VON SCHLAGSAHNE
HOUSEHOLD APPARATUS FOR WHIPPING CREAM

(30) Priorité: 22.06.1987 CH 2348/87
(43) Date de publication de la demande: 07.06.1989
(73) Titulaire: PASSONI, Gianfranco, CH-3013 Bern (CH)
(72) Inventeur: PASSONI, Gianfranco, CH-3013 Bern (CH)
(74) Mandataire: White, William
(86) Numéro de dépôt international: CH8800110
(87) Numéro de publication internationale: WO8810085

(56) Documents cités:
- DE-B- 1 107 161
- DE-C- 953 421
- FR-A- 643 808
- FR-A- 652 755
- GB-A- 397 621
- GB-A- 1 398 074
- US-A- 1 956 082

## Description

La présente invention concerne un appareil ménager permettant de fouetter la crème, selon le préambule de la revendication 1.

On connaît plusieurs méthodes et dispositifs qui permettent de fouetter de la crème. Une des plus anciennes méthodes est de fouetter à la main, dans un baquet, la crème liquide à l'aide d'un fouet. Un autre procédé bien connu est celui de mettre la crème liquide dans un récipient étanche et d'y injecter du gaz hilarant, ou autre, sous pression. Dans la gastronomie on se sert aussi de machines spéciales pour fouetter la crème, machines qui ajoutent à la crème liquide de l'air ambient, de préférence par mouvements saccadés, et pressent ce mélange à travers une conduite remplie d'obstacles forçant le mélange de crème et d'air de changer très souvent sa direction et de parcourir un long chemin avant d'aboutir à une buse de distribution de laquelle la crème sort fouettée. Des documents FR-A-643 808 et GB-A-379 621 sont aussi connus des appareils à émulsionner qui présentent un piston déplaceable à l'intérieur d'un bâti de manière à ce que le liquide à émulsionner est aspiré lors d'un mouvement du piston dans un sens et dégagé lors du même mouvement du piston en sens inverse, après avoir été forcé de passer entre le piston et la paroi intérieur du bâti. Dans ces appareils le piston est muni de rainures, soutenant son action d'aspiration du liquide à émulsionner à travers d'un canal aménagé dans le bâti.

Tous ces procédés connus présentent des désavantages, soit qu'ils sont fatigants, soit difficiles à pratiquer ou encore seulement utilisables si de grandes quantités de crème sont utilisées. De plus, les machines et appareils utilisés dans la gastronomie à ces fins ne se prêtent pas à une utilisation dans le ménage, car ils sont trop grands et lourds et trop chers pour un emploi très limité.

Le but de la présente invention est de proposer un appareil ménager permettant de fouetter sans problèmes même des quantités limitées de crème et facile à utiliser.

Selon l'invention, ce but est atteint par un appareil tel que défini dans la revendication 1.

Une variante de l'appareil selon l'invention fait l'objet de la revendication 2. Dans ce qui suit, des formes avantageuses d'un tel appareil sont décrites à l'aide du dessin qui montre à la
fig. 1 une coupe partielle à travers d'une partie d'une première variante d'un tel appareil et à la
fig. 2 une coupe à travers d'une partie d'une seconde variante d'un tel appareil.

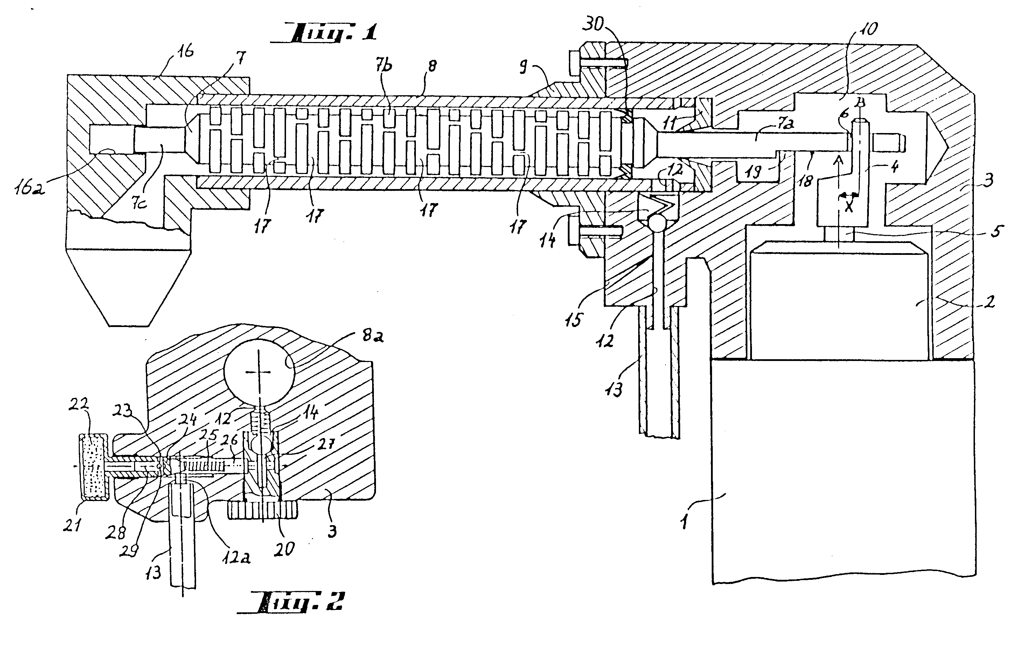

A la fig. 1 on reconnaît une partie d'un bâti 1 comprenant, entre autres, un moteur électrique 2 ainsi qu'une plaque de base de l'appareil, non représentée. Sur ce bâti peut être monté une partie supérieure 3 de l'appareil, englobant, dans une chambre arrière 10, un excentrique 4, de préférence, monté rétractablement sur un axe 5 du moteur électrique 2 et pouvant s'engager dans une fente ovale transversale 6 se trouvant dans la partie arrière 7a d'un piston 7 dont la partie moyenne 7b est logée dans un tube 8. Ce dernier peut être fixé sur la partie supérieure 3, de préférence à l'aide d'une bague 9 solidaire du tube 8. La chambre arrière 10, dans laquelle pénètre la partie arrière du piston 7, est séparée par un joint d'étanchéité à lèvre 11 agissant sur le piston 7, du volume d'une cavité de volume variable située entre le tube 8 et le piston 7 et formée par un second joint d'étanchéité à lèvre 30 monté entre la partie arrière 7a du piston et sa partie moyenne 7b. Dans ladite cavité aboutit un canal 12, la reliant à un tuyau montant 13 pouvant être plongé dans la crème liquide se trouvant dans un récipient, non représenté, placé sur la plaque de base de l'appareil. Dans le canal 12 est de préférence inséré une valve à bille 14, servant à empêcher la crème liquide aspirée dans le volume variable de la cavité, à être refoulée. Dans le canal 12 aboutit une percée 15 agissant selon le système Venturi et servant d'aspirer de l'air dans la crème liquide montant à travers du canal 12 pour aboutir dans le volume variable de la cavité. Sur le canal 12 est exercée une aspiration qui est due au fait que le piston 7 est oscillé lelong de son axe longitudinal par l'excentrique 4 actionné par le moteur électrique 2. Cette oscillation du piston 7 dans le tube 8 crée un effet de pompe à piston, car le volume de la cavité dans le tube 8, entre le joint d'étanchéité 11 et le second joint d'étanchéité à lèvre 30 est constamment modifié, c'est-à-dire agrandi au moment où le piston 7 est bougé à gauche, sur le dessin, respectivement comprimé au moment où le piston est déplacé vers la droite, sur le dessin. En agrandissant le volume vide, l'aspiration en résultant aspire de la crème liquide et de l'air à travers du canal 12. Dû au fait que lors de la compression du volume vide un refoulement du mélange crème/air par le canal 12 n'est pas possible, car la valve à bille 14 ferme le canal 12, ce mélange se déplace en direction d'une buse 16 montée sur le bout avant du tube 8, en passant par des noyures 17 aménagées dans la partie moyenne 7b du piston 7. Ainsi l'oscillation du piston 7 sert à pomper de la crème mélangée à de l'air du canal 12 à la buse 16. Le déplacement de ce mélange se fait par mouvements saccadés qui fouettent la crème peu à peu, de sorte qu'à l'instant où celle-ci sort de la buse 16, elle se présente sous forme complètement fouettée. Le second joint d'étanchéité à lèvre 30 appuye l'action d'aspiration exercée par l'oscillation du piston 7 sur le mélange crème/air dans le canal 12 ainsi que le mouvement d'avancement de ce mélange augmentant en volume durant son déplacement vers la buse 16.

La buse 16 présente, de préférence, une percée 16a dans laquelle la partie avant 7c du piston 7 peut être guidée.

Suivant la vitesse de rotation de l'axe 5 du moteur électrique 2 un entre-axe X de un à deux millimètres entre l'axe central A de l'axe 5 et l'axe central B de l'excentrique 4 est suffisant pour garantir un débit régulier de crème fouettée à la buse 16.

Afin de permettre un nettoyage rapide et simple du piston 7, du tube 8 et de la buse 16 après emploi de l'appareil selon l'invention, il est avantageux si la partie supérieure 3 de l'appareil peut être démontée facilement du bâti 1, par exemple à l'aide d'un accouplement à bajonette. La buse 16 n'étant, de préférence seulement coincée sur le tube 8, est également démontable, de sorte que le piston 7 peut être sorti du tube 8 vers l'avant. Ainsi toutes les pièces pouvant venir en contact avec la crème peuvent être accédées facilement. Après leur nettoyage, ces pièces sont à nouveau assemblées et la partie supérieure 3 de l'appareil est remontée sur le bâti 1. Afin de garantir un emplacement correct du piston 7 dans le tube 8, de sorte à ce que l'excentrique 4 puisse s'engager dans la fente ovale 6, la partie arrière 7a du piston 7 est de préférence munie d'un plat 18 coopérant, à cette fin, avec un ergot 19 formé dans la partie supérieure 3.

A la fig. 2 on reconnaît une construction plus sophistiquée de l'entrée d'air dans le canal montant 12. Dans cette variante d'exécution de l'appareil selon l'invention il est prévu une percée 26 horizontale aboutissant dans une partie 27 du canal 12 se trouvant en-dessous de la valve à bille 14, elle de préférence montée dans une vis 20. Dans la percée 26 est vissé une pièce englobant dans sa partie extérieure 21 un filtre à air 22, à travers duquel et par un canal 28, des percées 29 et des noyures 23 l'air est aspiré dans la percée 26. Un cône 24, formé sur cette pièce, sert, en coopération avec la paroi de la percée 26, comme régulateur du volume d'air aspiré. La partie inférieure 12a du canal montant de la crème se trouve au bout supérieur du tuyau 13 et débouche immédiatement après le cône 24 dans la percée 26. Dans cette dernière se trouve encore logé, de préférence, une partie vis 25 de la pièce précitée. Le mélange de crème et d'air pénètre, à la sortie du canal 12, dans un canal 8a formé soit par le tube 8 (fig. 1), soit par la partie supériuere 3 de l'appareil.

Cette construction du canal d'aspiration de l'air permet de règler à volonté le volume d'air mélangé à la crème liquide, de sorte que la consistance de la crème fouettée peut être réglée.

Pour rendre simple et bon marché la construction de l'appareil selon l'invention, il peut être prévu, dans une exécution particulière de l'appareil selon l'invention, que le piston 7 coulisse, avec un jeu minimal, directement dans le tube 8.

Le tuyau montant peut de préférence être fait d'une matière flexible, de sorte que des récipients de dimensions diverses peuvent être utilisés comme "magasins" pour la crème liquide.

Dans une exécution encore différente de l'appareil selon l'invention il peut être prévu de remplacer le moteur électrique et l'excentrique comme éléments d'actionnement par une barre en acier logée dans le piston et une bobine magnétique placée autour du tuyau 8 et actionnée de manière à ce que des champs magnétiques de directions alternantes sont crées, de sorte à ce que le piston est oscillé.

Bien entendu il est possible de combiner les différentes variantes de l'appareil selon l'invention décrites ci-dessus, afin d'obtenir des exécutions différentes de l'appareil. D'autres modifications peuvent également être apportées à la construction de cet appareil.

L'homme du métier reconnaît facilement que l'appareil selon l'invention est bon marché dans sa fabrication et permet sans autre de fouetter même des quantités très restraintes de crème liquide, sans grandes pertes. Le maniement de cet appareil étant très facile et sans aucun risque, il se prête bien à un emploi dans toutes cuisines ménagères.

## Revendications

1. Appareil ménager permettant de fouetter la crème, comprenant au moins une partie supérieure (3) avec un canal (12) à travers duquel un mélange de crème et d'air est aspiré, un piston (7) oscillant lelong de son axe longitudinal dans un tube (8) et portant des noyures (17), le tube (8) portant une buse (16), caractérisé en ce que les noyures (17) sont disposées de telle manière sur le piston (7) que dans une cavité (8a) dans le tube (8) une action d'aspiration est suivi d'une action de compression aspirant un mélange de crème et d'air à travers du canal (12) et le pompant à travers les noyures (17) par mouvements saccadés afin de fouetter la crème au cours du déplacement du mélange en direction de la buse (16), ladite cavité (8a) étant délimitée par le tube (8), une valve à bille (14), un premier joint à lèvres (11) fixe et un second joint à lèvres (30) solidaire au piston (7).

2. Appareil selon la revendication 1, caractérisé en ce que le piston (7) comprend une barre en acier et est oscillé par une bobine magnétique logée autour du tuyau (8) et actionnée de manière à créer un champ magnétique alternant sa direction.

## Claims

1. Household apparatus for whipping cream,comprising at least an upper part (3) with a system of passages (12), through which a mixture of cream and air is drawn, a piston (7) which oscillates along its longitudinal axis and is mounted within a tube (8) and having cutouts (17), and the tube ending in a nozzle (16), characterized in that the cutouts (17) are mounted on the piston (7) in a way, such that in a cavity (8a) of the tube (8), a drawing-in action is followed by a compression action drawing a mixture of cream and air through the passage (12) and pumping it through the cutouts (17) by an oscillating movement for progressively whipping the cream throughout the displacement of the mixture in the direction to the nozzle (16), said cavity (8a) being delilimited by the tube (8), a ball valve (14), a first lip gasket (11) fixed in the tube (8) and a second lip gasket (30) mounted on the piston.

2. Apparatus as claimed in claim 1, characterized in that the piston (7) comprises a steel bar and is oscillated by a magnetic solenoid disposed around the tube (8) and is actuated so as to create a magnetic field whose direction alternates.

## Patentansprüche

1. Haushaltgerät zur Herstellung von Schlagrahm mit einer oberen Partie (3) mit einem Kanal (12) durch den eine Mischung von Rahm und Luft gesaugt wird, einem Kolben (7) der axial in einem Rohr (8) oszilliert und Vertiefungen (17) aufweist, das Rohr trägt eine Düse (16), gekennzeichnet durch Vertiefungen (17) auf dem Kolben (7), die derart angeordnet sind, dass in einem Hohlraum (8a) im Rohr (8) ein Ansaugen von einer Kompression gefolgt ist um eine Mischung von Rahm und Luft durch den Kanal (12) zu saugen und diese über die Vertiefungen (17) mittels einer oszillierenden Bewegung zu pumpen, um den Rahm während der Fortbewegung der Mischung in Richtung zur Düse (16) hin zu schlagen, die genannten Vertiefungen (8a) sind durch das Rohr (8) begrenzt, ein Kugelventil (14), eine erste fixierte Lippendichtung (17) und eine einzelne zweite Lippendichtung (30) am Kolben (7).

2. Haushaltgerät nach Anspruch 1, dadurch gekennzeichnet, dass der Kolben (7) einen Eisenstab enthält und durch eine magnetische Spule um das Rohr (8) herum oszilliert wird, die derart erregt wird, dass sie ein alternierendes magnetisches Feld erzeugt.
